Europäisches Patentamt

European Patent Office

Office européen des brevets

(11) Veröffentlichungsnummer: **0 381 208**
**A2**

# (12) EUROPÄISCHE PATENTANMELDUNG

(21) Anmeldenummer: 90101997.6

(22) Anmeldetag: 01.02.90

(51) Int. Cl.⁵: **G11B 20/18, G11B 20/10**

(30) Priorität: 03.02.89 DE 3903163
03.02.89 DE 3903165

(43) Veröffentlichungstag der Anmeldung:
08.08.90 Patentblatt 90/32

(84) Benannte Vertragsstaaten:
**AT BE CH DE DK ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Kaaden, Jürgen, Dipl.-Ing.**
**Im Tannhörnle 10**
**D-7730 VS-Pfaffenweiler(DE)**
Erfinder: **Bigge, Franz, Dr.-Ing.**
**Bleiche Strasse 5**
**D-7730 VS-Villingen(DE)**
Erfinder: **Uhde, Dietmar, Dipl.-Ing.**
**Weiherstrasse 11**
**D-7744 Königsfeld(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Aufzeichnungsgerät zur digitalen Aufzeichnung und Wiedergabe von Audio- bzw. Videosignalen.**

(57) Bei einem Aufzeichnungsgerät zur digitalen Aufzeichnung und Wiedergabe von Audiosignalen, das
eine Signalverarbeitungs-Schaltung enthält, an deren
Ausgang bei Wiedergabe fortlaufend auf die Fehlerrate des Nutzsignals bezogene Signale anstehen,
wird eine weitere Verarbeitungsschaltung zur Abfrage, zur Verarbeitung und zur Zuführung der verarbeiteten Signale zu einer Anzeigevorrichtung für die
Fehlerrate vorgesehen. Hierdurch wird für den Benutzer die Beurteilung der Qualität des verwendeten
Bandmaterials oder seines Gerätes erleichtert.

## Aufzeichnungsgerät zur digitalen Aufzeichnung und Wiedergabe von Audio- bzw. Videosignalen

Die Erfindung betrifft ein Aufzeichnungsgerät zur digitalen Aufzeichnung und Wiedergabe von Audio- bzw. Videosignalen, mit einer Signalverarbeitungs-Schaltung, an deren Ausgang bei Wiedergabe fortlaufend auf die Fehlerrate des Nutzsignals bezogene Signale anstehen.

Bei bekannten Aufzeichnungsgeräten dieser Art zur digitalen Aufzeichnung und Wiedergabe von Audiosignalen (DAT) werden in die Datenübertragung Fehlerschutz-Maßnahmen in Form von sogenannten Fehler-Codes eingebaut, um Bündel- und Zufallfehler bei Wiedergabe einer Aufzeichnung festzustellen und zu korrigieren. Bündelfehler entstehen z.B. durch Drop-outs im Band, Staub, Schmutz, Kratzer oder verschmutzte Magnetköpfe. Zufallsfehler können durch Übersprechen von den Nachbarspuren, unvollkommen gelöschte Daten aus der vorherigen Aufzeichnung oder durch Instabilitäten des Aufzeichnungsträgertransports verursacht werden. Fehler dieser Art werden erkannt und im Rahmen des Systems innerhalb des Gerätes korrigiert, so daß sie im Normalfall nicht hörbar werden.

Von Nachteil ist dabei, daß der Benutzer des Aufzeichnungsgerätes nicht merkt, wie weit die für die Entstehung von Feh lern verantwortlichen Ursachen schon fortgeschritten sind. Es ist dadurch praktisch nicht möglich, die Qualität des Aufzeichnungsmaterials oder der Köpfe und Mängel im Antriebssystem zu beurteilen, so daß z.B. nicht rechtzeitig genug eine Sicherungskopie einer Aufzeichnung hergestellt wird und zu spät notwendige Reparatur- und Service-Maßnahmen durchgeführt werden.

Der Erfindung liegt die Aufgabe zugrunde, bei einem Gerät der eingangs genannten Art dem Benutzer die Beurteilung der Qualität des verwendeten Aufzeichnungsmaterials oder seines Gerätes zu erleichtern.

Die gestellte Aufgabe wird gemäß der Erfindung dadurch gelöst, daß eine weitere Verarbeitungsschaltung zur Abfrage, zur Verarbeitung und zur Zuführung der verarbeiteten Signale zu einer Anzeigevorrichtung für die Fehlerrate vorgesehen ist.

Auf diese Weise läßt sich rechtzeitig feststellen, ob und wie stark die Fehlerrate zunimmt und einem unzulässigen Wert zustrebt, so daß rechtzeitig den Ursachen nachgegangen und deren Beseitigung vorgenommen werden kann.

Die Anzeige kann permanent erfolgen, jedoch ist es zweckmäßig, zur Aktivierung der Anzeige eine Taste vorzusehen, die von der Bedienungsperson bedient werden muß, um die Fehlerrate zu prüfen.

Statt dessen oder zusätzlich kann die Aktivierung der Anzeige auch durch Eingabe von Code-Worten erfolgen.

In manchen Fällen mag es auch ausreichen, die Aktivierung der Anzeige automatisch zu bewirken, sobald ein Grenzwert der Fehlerrate überschritten wird, wobei diese Maßnahme auch zusätzlich zu den vorangehend genannten Aktivierungsmöglichkeiten mit Taste oder Code-Wort getroffen werden kann.

Eine Weiterbildung sieht vor, daß die weitere Verarbeitungsschaltung mit einer Signalverstärkerstufe, deren Entzerrung einstellbar ist, verbunden ist und die zur Entzerrung beim Wiedergabebetrieb dienenden Komponenten so gesteuert werden, daß die Fehlerrate stets auf ihrem Minimum gehalten wird.

Dies hat folgende Vorteile: Bisher wird die Entzerrung im Rahmen der Gerätefertigung einmalig unter Verwendung einer Meßkassette mit einem externen Fehlerraten-Meßgerät durchgeführt.

Bei einem Wechsel des Kopfrades oder einzelner Magnetköpfe in dem Kopfrad muß die Einstellung neu vorgenommen werden. Die Einstellung ist schwierig, weil der Kopfvorverstärker abgeschirmt werden muß und meist recht unzugänglich montiert ist. Für Kassetten anderer Aufzeichnungsmaterialien kann die Einstellung falsch sein. Außerdem unterliegt die einmal vorgenommmene Einstellung einer Alterung.

Mit der durch die Fehlerrate gesteuerten Entzerrung hingegen kann die Einstellung einer optimalen Entzerrung unabhängig von dem verwendeten Aufzeichnungsmaterial bei gleichzeitiger Beseitigung des Problems der Alterung der Einstellung erfolgen.

Vorzugsweise erfolgt dabei die Einstellung der Entzerrung kontinuierlich, sobald der Wiedergabebetrieb eingeschaltet wird, so daß automatisch bei jedem verwendeten Aufzeichnungsmaterial immer die optimalen Verhältnisse vorgegeben werden und eine Alterung der Einstellung ausgeschlossen wird, weil ständig die aktuellen Fehlerkennungsdaten ausgewertet werden.

Eine Neueinstellung der Entzerrung kann auch statisch bei Änderungen im System, z.B. bei Wechsel der Kassette, oder bei Veränderungen in der Konfiguration, z.B. bei Erneuerung der Kopftrommel oder eines Magnetkopfes durchgeführt werden.

Wenn mehr als ein Kanal vorhanden ist, z.B. zwei Kanäle wie in R-DAT-Geräten, ist es zweckmäßig, die Korrektur der Entzerrung für jeden Kanal vorzunehmen und zugleich die Kanäle auf beste Symmetrie bei Fehlerraten-Minimum abzugleichen.

In Ausgestaltung der Erfindung erfolgt die Änderung der Entzerrung vorzugsweise durch Einschalten verschiedener Widerstände bzw. Kapazitäten im Gegenkopplungszweig des Verstärkers. Statt dessen kann die Änderung der Entzerrung aber auch durch Einschaltung verschiedener Widerstände in ein oder mehrere aktive oder passive Filter erfolgen.

Weiterbildungen und vorteilhafte Ausgestaltungen der Erfindung ergeben sich aus den Ansprüchen, der weiteren Beschreibung und der Zeichnung, die Ausführungsbeispiele veranschaulicht.

In der Zeichnung zeigen:

Fig. 1 ein Blockschaltbild für die Fehlerraten-Anzeige,

Fig. 2 ein Blockschaltbild für die Steuerung der Vorverstärkerentzerrung.

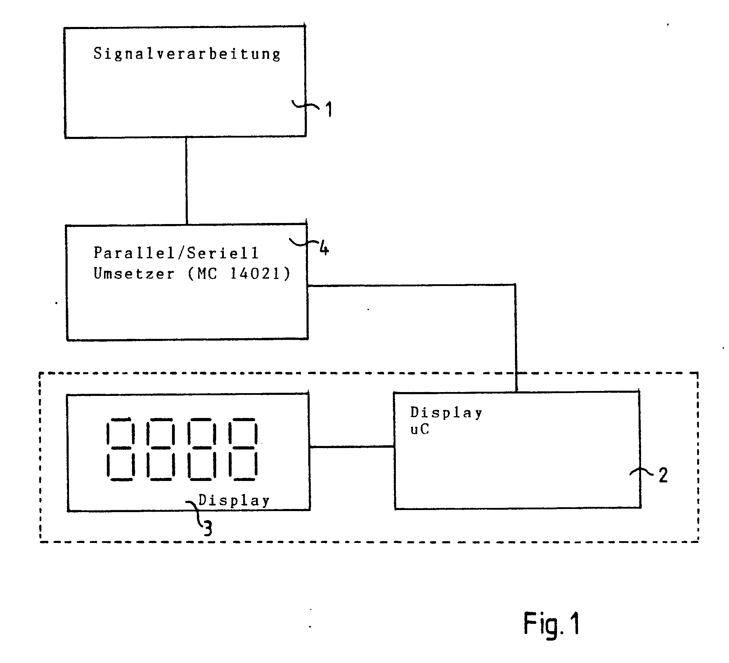

In Fig. 1 ist ein Blockschaltbild für die Fehlerraten-Anzeige dargestellt, wie sie beispielsweise in einem R-DAT-Gerät einsetzbar ist. In der im Magnetbandgerät vorhandenen Signalverarbeitungs-Schaltung 1 werden die bei Wiedergabe vom Magnetband abgetasteten Nutz- und Spurnachführungs-Signale verarbeitet, und diese Schaltung liefert an ihrem Ausgang ferner aufgrund von in die Aufzeichnung eingebauten Fehler-Codes Fehler-Korrektur-Signale.

Die Erfindung sieht nun vor, die von der Verarbeitungsschaltung gelieferten Fehlererkennungsdaten einem Mikrocomputer 2 zur Fehlerratenmessung zuzuführen. Die Fehlererkennungsdaten werden vom Mikrocomputer nicht direkt aufgenommen, sondern es wird ein Wandler 4 zum Einlesen der sehr häufig aktualisierten Daten eingesetzt. Dieser setzt die im Abstand von wenigen Mikrosekunden kommenden parallelen ·Fehlerdaten in ein serielles Bit-Format um.

Im Mikrocomputer werden die Fehler bewertet, und es wird darin die Anzeige-Formatierung vorgenommen. Die Daten können dann durch Tastendruck und/oder durch Eingabe spezieller Code-Worte abgerufen und einer Anzeigevorrichtung 3 zugeführt werden. Die Anzeige kann digital z.B. durch eine 7-Segment-Anzeige oder analog z.B. ähnlich einer Aussteuerungs-Anzeige erfolgen, und es kann auch ggfs. eine im Wiedergabegerät bereits vorhandene Anzeigevorrichtung ausgenutzt werden.

Anstelle oder zusätzlich zu der manuell aktivierbaren Anzeige kann im Mikrocomputer auch ein Wert für die Fehlerrate vorgegeben werden, bei dessen Überschreitung der Mikrocomputer entscheidet, daß diese Daten zur Anzeige kommen.

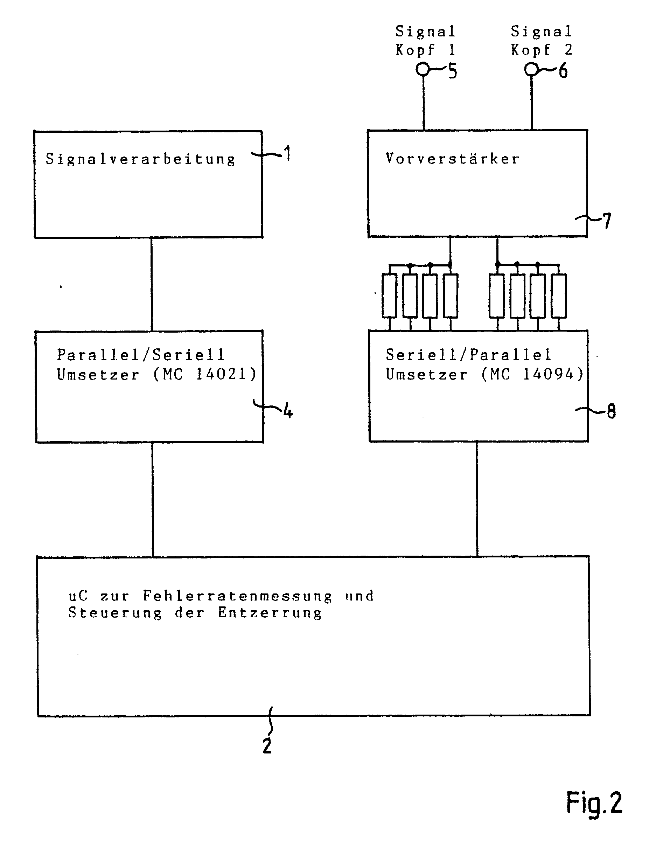

Fig. 2 zeigt ein Blockschaltbild für die Steuerung der Vorverstärkerentzerrung.

Die beiden rotierenden Magnetköpfe 5 und 6 z.B. eines R-DAT-Gerätes sind über einen Vorverstärker 7 mit einer Signalverarbeitungsschaltung 1 verbunden, in der die bei Wiedergabe vom Magnetband abgetasteten Nutz- und Spurnachführungs-Signale verarbeitet werden, und die aufgrund von in die Aufzeichnung eingebauten Fehler-Codes an eine Ausgangsgruppe Fehler-Korrektursignal liefert, oder die einen Ausgang hat, an dem erkannt werden kann, wann ein Korrektursignal im Datenbus zur Verfügung steht.

Die Erfindung sieht nun vor, die von der Verarbeitungsschaltung 1 gelieferten Fehler-Daten einem Mikrocomputer 2 zur Fehlerraten-Messung und zur Steuerung der Entzerrung im Vorverstärker 7 zuzuführen. Die Fehler-Daten werden vom Mikrocomputer nicht direkt aufgenommen, sondern es wird ein Wandler 4 zum Einlesen der sehr häufig aktualisierten Daten eingesetzt. Dieser setzt die im Abstand von wenigen Mikrosekunden kommenden parallelen Fehler-Daten in ein serielles 8-Bit-Format um. Diese Daten kann der Mikrocomputer 2 immer dann auslesen, wenn Zeit für diese Aufgabe besteht.

Die nunmehr im Mikrocomputer 2 befindlichen Daten werden gewichtet und der Ausgangsstufe, einem Digital-Analog-Konverter 8 zugeführt, der die vom Mikrocomputer kommenden seriellen Daten in ein paralleles 8-Bit-Format umsetzt. Es wird ein Baustein für beide Kanäle benutzt, so daß eine Auflösung von 4 Bit pro Kanal zur Verfügung steht. Diese vier Ausgänge pro Kanal steuern direkt Widerstands-Netzwerke, die sich im Gegenkopplungszweig des jeweiligen Kanals im Vorverstärker 7 befinden, wobei die Einschaltung nach Maßgabe des Mikrocomputers 2 so erfolgt, daß sich eine minimale Fehlerrate ergibt.

## Ansprüche

1. Aufzeichnungsgerät zur digitalen Aufzeichnung und Wiedergabe von Audio- bzw. Videosignalen, mit einer Signalverarbeitungs-Schaltung, an deren Ausgang bei Wiedergabe fortlaufend auf die Fehlerrate des Nutzsignals bezogene Signale anstehen, **dadurch gekennzeichnet**, daß eine weitere Verarbeitungsschaltung (2) zur Abfrage, zur Verarbeitung und zur Zuführung der verarbeiteten Signale zu einer Anzeigevorrichtung (3) für die Fehlerrate vorgesehen ist.

2. Aufzeichnungsgerät nach Anspruch 1, **dadurch gekennzeichnet**, daß die weitere Verarbeitungsschaltung (2) aus einem Mikrocomputer besteht.

3. Aufzeichnungsgerät nach Anspruch 1 oder 2, **dadurch gekennzeichnet**, daß zur Aktivierung der Anzeige eine Taste vorgesehen ist.

4. Aufzeichnungsgerät nach einem der Ansprüche 1 bis 3, **dadurch gekennzeichnet**, daß zur Aktivierung der Anzeige die Eingabe von Code-Worten dient.

5. Aufzeichnungsgerät nach einem der Ansprüche 1 bis 4, **dadurch gekennzeichnet**, daß die Aktivierung der Anzeige automatisch bei Überschreitung eines Grenzwertes der Fehlerrate erfolgt.

6. Aufzeichnungsgerät nach Anspruch 1 oder 2, **dadurch gekennzeichnet**, daß die weitere Verarbeitungsschaltung (2) mit einer Signalverstärkerstufe, deren Entzerrung einstellbar ist, verbunden ist und die zur Entzerrung beim Wiedergabebetrieb dienenden Komponenten so gesteuert werden, daß die Fehlerrate stets auf ihrem Minimum gehalten wird.

7. Aufzeichnungsgerät nach Anspruch 6, **dadurch gekennzeichnet**, daß die Einstellung der Entzerrung kontinuierlich erfolgt.

8. Aufzeichnungsgerät nach Anspruch 6, **dadurch gekennzeichnet**, daß eine Neueinstellung der Entzerrung statisch erfolgt, z.B. bei Wechsel der Kassette.

9. Aufzeichnungsgerät nach einem der Ansprüche 6 bis 8, **dadurch gekennzeichnet**, daß die Korrektur der Entzerrung für jeden im Gerät vorhandenen Kanal erfolgt.

10. Aufzeichnungsgerät nach Anspruch 9, **dadurch gekennzeichnet**, daß bei mehr als einem im Gerät vorhandenen Kanal ein Abgleich auf beste Symmetrie bei Fehlerraten-Minimum erfolgt.

11. Aufzeichnungsgerät nach einem der Ansprüche 6 bis 10, **dadurch gekennzeichnet**, daß die Änderung der Entzerrung durch Einschaltung verschiedener Widerstände bzw. Kapazitäten im Gegenkopplungszweig des Verstärkers erfolgt.

12. Aufzeichnungsgerät nach einem der Ansprüche 6 bis 11, **dadurch gekennzeichnet**, daß die Änderung der Entzerrung durch Einschaltung verschiedener Widerstände in ein oder mehrere aktive oder passive Filter erfolgt.

```
┌─────────────────────────┐
│                         │
│  Signalverarbeitung     │
│                         │
│                       ⌐1 │
└───────────┬─────────────┘
            │
            │
            │
┌───────────┴─────────────┐
│                      ⌐4  │
│  Parallel/Seriell       ├──────────────┐
│  Umsetzer (MC 14021)    │              │
│                         │              │
└─────────────────────────┘              │
                                         │
┌ ─ ─ ─ ─ ─ ─ ─ ─ ─ ─ ─ ─ ─ ─ ─ ─ ─ ─ ─ │─ ─ ┐
 ┌───────────────────────┐      ┌────────┴──────────┐
││                       │      │                   │ │
 │   ╔═╗╔═╗╔═╗╔═╗         │      │  Display          │
││   ║ ║║ ║║ ║║ ║         ├──────┤  uC               │ │
 │   ╚═╝╚═╝╚═╝╚═╝         │      │                   │
││                       │      │                ⌐2 │ │
 │          Display      │      │                   │
│└──────────┬────────────┘      └───────────────────┘ │
            3
└ ─ ─ ─ ─ ─ ─ ─ ─ ─ ─ ─ ─ ─ ─ ─ ─ ─ ─ ─ ─ ─ ─ ─ ─ ─ ┘
```

Fig. 1

H87/105-1kb

Fig.2

H8 7/105-2kb